(19) Europäisches Patentamt

European Patent Office

Office européen des brevets

(11) **EP 2 209 255 A1**

(12) **EUROPEAN PATENT APPLICATION**
published in accordance with Art. 153(4) EPC

(43) Date of publication:
**21.07.2010 Bulletin 2010/29**

(51) Int Cl.:
***H04L 12/14*** *(2006.01)*

(21) Application number: **09724928.8**

(22) Date of filing: **27.03.2009**

(86) International application number:
**PCT/CN2009/071056**

(87) International publication number:
**WO 2009/117973 (01.10.2009 Gazette 2009/40)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **28.03.2008 CN 200810090359**

(71) Applicant: **Huawei Technologies Co., Ltd.
Longgang District, Shenzhen
Guangdong 518129 (CN)**

(72) Inventor: **CHEN, Qian
Longgang District 518129
Shenzhen (CN)**

(74) Representative: **Kreuz, Georg Maria
Huawei Technologies
Riesstrasse 25
80992 München (DE)**

(54) **METHOD, SYSTEM, MEDIA PROCESSING EQUIPMENT AND MEDIA CONTROLLING EQUIPMENT FOR REPORTING THE USAGE AMOUNT OF DATA SERVICE**

(57) A method and a system for reporting use Amount of a data service, an MP, and an MC are disclosed herein. The method includes: An MP receives a quota delivered by an MC; the MP sets the quota for a termination on the MP, and statisticizes the use amount of the data service of the termination; and reports a Quota Completion event to the MC when the use amount of the data service consumed by the termination reaches the quota. The system includes an MC and an MP which are telecom-connected. In the embodiments of the present invention, through real-time interaction between the MC and the MP, the MP can monitor the use amount of the data service in real time, and report the statistic information when conditions are fulfilled. In this way, the use amount of the data service can be reported proactively in real time.

FIG. 2

## Description

This application claims priority to Chinese Patent Application No. 200810090359.7, filed with the Chinese Patent Office on March 28, 2008 and entitled "Method and System for Reporting Use Amount of Data Service, Media Processor and Media Controller", which is hereby incorporated by reference in its entirety.

FIELD OF THE INVENTION

The present invention relates to a technology of reporting the use amount of a data service, and in particular, to a method and a system for reporting the use amount of a data service proactively in a split architecture, a Media Processor (MP), and a Media Controller (MC).

BACKGROUND OF THE INVENTION

In a network of a split architecture, the service or control is separated from the bearer, and a standard protocol is adopted to implement interconnection and communication between network entities. In the existing split architecture, the use amount of a data service is obtained by requesting the use amount. That is, the MC sends a request for the statistic information such as quantity and traffic to the MP after completion of a session or in a process of a session. The MP returns a response message to the MC in response to the request. The response message carries the statistic information.

The prior art is defective in: The network of the split architecture in the prior art is unable to control the use amount of the data service in real time. On the existing network of a split architecture, the MC is separated from the MP. Real-time control on the use amount of a data service requires real-time monitoring of the quantity or traffic of a service in real time, and reporting of the use amount proactively when the monitored quantity or traffic reaches a threshold. In the prior art, the MC is unaware when the quantity or traffic of a data service reaches the threshold, and unaware of the time of querying the use amount. The MP response for the statistics of the quantity or traffic of a data service is unclear when to report the statistic data to the MC. In the prior art, therefore, no real-time interaction between the MC and the MP is practicable to control the use amount of a data service in real time in a network of a split architecture.

SUMMARY OF THE INVENTION

The objective of the present invention is to report the use amount of a data service in real time in a network of a split architecture.

In order to fulfill this objective, a method for reporting use amount of a data service proactively in real time in a split architecture is provided in an embodiment of the present invention. The method includes:

by an MP, receiving a quota delivered by an MC; and
setting the quota for a termination, and collecting a use amount of a data service of the termination, where the termination is created by the MP when a User Equipment (UE) accesses the service and is a logical entity mapped to the UE; and reporting a Quota Completion event to the MC when the use amount of the data service consumed by the termination reaches the quota.

An MC provided in another embodiment of the present invention includes:

a first controlling module, adapted to: send a quota specified in a quota indication to an MP after receiving the quota indication, and instruct the MP to set the quota for a termination; and
a second controlling module, adapted to receive a Quota Completion event which is reported by the MP when the use amount of the data service consumed by the termination reaches the quota.

An MP provided in another embodiment of the present invention includes:

a first processing module, adapted to: receive a quota delivered by an MC or receive the quota and a validity period;
a second processing module, adapted to: set the quota for a termination, and collect a use amount of a data service of the termination; and
a third processing module, adapted to report a Quota Completion event to the MC when the use amount of the data service consumed by the termination reaches the quota.

A system for reporting use amount of a data service proactively in real time in a split architecture in another embodiment of the present invention includes an MC and an MP which are telecom-connected.

The MC is adapted to deliver a quota specified in a quota indication to an MP after receiving the quota indication; and

The MP is adapted to: set the quota for a termination, and collect a use amount of a data service of the termination; and report a Quota Completion event to the MC when the use amount of the data service consumed by the termination reaches the quota.

In the embodiments of the present invention, through real-time interaction between an MC and an MP, the MP can monitor the use amount of a data service in real time, and report the statistic information when conditions are fulfilled. In this way, the use amount of the data service can be reported proactively in real time.

BRIEF DESCRIPTION OF THE DRAWINGS

To illustrate the technical solution according to the embodiments of the present invention or in the prior art more clearly, the accompanying drawings for describing the embodiments or the prior art are introduced briefly below. Apparently, the accompanying drawings in the following description are only some embodiments of the present invention, and persons of ordinary skill in the art can derive other drawings from the accompanying drawings without creative efforts.

FIG. 1 is a flowchart of a method for reporting a use amount of a data service proactively in real time in a split architecture in the first embodiment of the present invention;

FIG. 2 is a flowchart of a method for reporting a use amount of a data service proactively in real time in a split architecture in the second embodiment of the present invention;

FIG. 3 shows an architecture of a message conference service in an embodiment of the present invention;

FIG. 4 is a signaling flowchart of an online charging process of a message conference service in an embodiment of the present invention;

FIG. 5 shows a structure of a system for reporting a use amount of a data service proactively in real time in a split architecture in the first embodiment of the present invention; and

FIG. 6 shows a structure of a system for reporting a use amount of a data service proactively in real time in a split architecture in the second embodiment of the present invention.

DETAILED DESCRIPTION OF THE EMBODIMENTS

The following detailed description is directed to the technical solution of the present invention with reference to the accompanying drawings. However, the embodiments to be described are only a part of, rather than all of, the embodiments of the present invention. In addition, all other embodiments, which can be derived by those skilled in the art from the embodiments given herein without any creative efforts, fall within the scope of the present invention.

First Method Embodiment

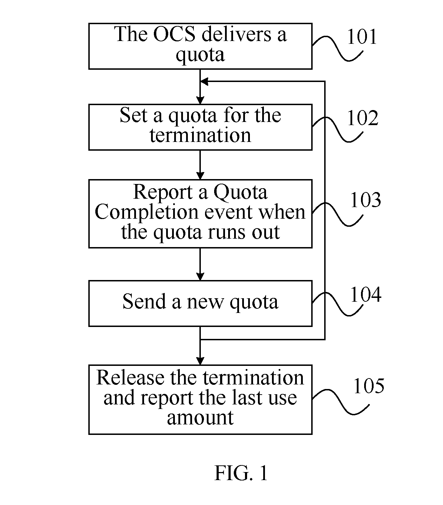

This embodiment provides a method for reporting use amount of a data service proactively in real time in a split architecture. As shown in FIG. 1, the method includes:

Step 101: An MC receives a quota indication. Specifically, the quota indication may be delivered by an Online Charging System (OCS) to the MC.

The quota indication includes the quota to be specified. The quota is a threshold of use amount of a data service allowed to be sent or received by a user, for example, quantity or traffic of messages in a data service. The traffic refers to overall traffic or payload traffic. The payload traffic refers to actual effective traffic exclusive of overhead.

The quota set for the sending direction is known as a sending direction quota; and the quota set for the receiving direction is known as a receiving direction quota. Specifically, an H.248 protocol package may be extended to deliver the quota, increase interaction between the MC and the MP, and report the use amount of a data service proactively in real time.

Step 102: According to the received quota indication, the MC instructs an MP to set a quota for a termination.

The termination is created by the MP when the UE accesses the service, and is a logical entity mapped to the UE. The sending direction quota may be the same as or different from the receiving direction quota. For example, both the sending direction quota and the receiving direction quota are set according to traffic, and the quota is 1024 bytes.

Step 103: After completion of setting the quota, the MP collects the use amount of the data service of the termination; and reports a Quota Completion event to the MC when the use amount of the data service consumed by the termination reaches the quota, namely, when the quota runs out. The Quota Completion event carries the consumed quota. For example, the consumed traffic of the data service is 1024 bytes.

After receiving the Quota Completion event, the MC may report the Quota Completion event to the OCS, and the OCS performs charging for the termination according to the value of the quota carried in the Quota Completion event. In this way, online charging is performed in real time. Specifically, the OCS deducts the corresponding sum in the account corresponding to the UE.

Step 104: After receiving a new quota indication, the MC may repeat steps 102-103. Upon receiving a session release request from the UE, the MC performs step 105.

The quota modification process in this step may recur according to the state of the UE using the data service, and the modified quota may be the same as or different from the old quota.

Step 105: When the UE sends a session release request to the MC to request release of the current session, the MC instructs the MP to release the termination corresponding to the session.

Specifically, the MP calculates the accumulated value of the use amount of the data service used by the termination, and returns the accumulated value to the MC. According to the accumulated value, the MC calculates the last use amount which has not been reported from the termination yet before release of the session. For example, if the received accumulated value is 2048 bytes, and all use amounts reported previously add up to 1536 bytes, the last use amount of the termination is calculated as 2048-1536=512 bytes.

Alternatively, the MC may report the last use amount to the OCS, and the OCS performs charging according to the last use amount.

Through the method in the embodiment described above, the MC interacts with the MP in real time, and the MP can monitor the use amount of the data service in real time, and report a statistic information when conditions are fulfilled. In this way, the use amount of the data service can be reported proactively in real time.

Second Method Embodiment

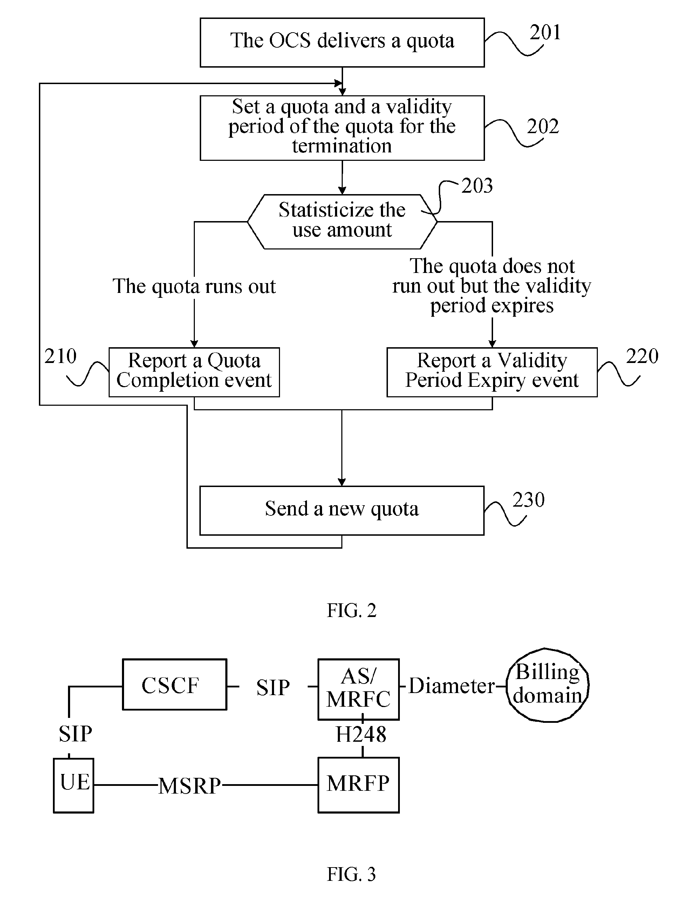

This embodiment is an improvement of the first method embodiment, and provides another method for reporting use amount of a data service proactively in real time in a split architecture. As shown in FIG. 2, the method includes:

Step 201 is similar to step 101.

Step 202: After receiving a quota indication, an MC instructs an MP to set a quota and a validity period for a termination. For example, the validity period is 10 seconds, and the quota is 1024 bytes.

Step 203: After the quota and the validity period are set, statistics are made for the use amount of the data service of the termination. When the quota runs out, the process proceeds to step 210; when the quota has not run out but the validity period expires, the process proceeds to step 220, where the expiry of the validity period may be judged by a timer.

Step 210: The MP reports a Quota Completion event to the MC. The Quota Completion event carries the consumed quota. For example, messages of 1024 bytes have been consumed.

Step 220: The MP reports a Validity Period Expiry event. The Validity Period Expiry event carries the use amount of the data service consumed within the validity period, for example, 512 bytes, which is less than the quota of 1024 bytes.

MC may also report the Quota Completion event and the Validity Period Expiry event to an OCS, and the OCS performs charging for the termination according to the quota value carried in the Quota Completion event and the data service use amount carried in the Validity Period Expiry event.

Step 230: After receiving a new quota instruction, the MC may repeat steps 202-203 and steps 210-220 to control the termination and report the use amount of the data service proactively in real time.

The quota modification process in this step may recur according to the state of the UE using the data service, and the modified quota may be the same as or different from the old quota.

Afterward, the last use amount may be reported according to step 106 and step 107 in the first embodiment after the session is released.

Through the method in the embodiment described above, a validity period is set so that the MC obtains the use amount of the data service of the termination periodically, and it is avoided that the statistic information fails to be reported in the case that the use amount of the data service does not reach the preset quota due to equipment faults.

Taking the charging for a message conference service as an example, the following elaborates a signaling flow of the method for reporting the use amount of a data service proactively in real time in the foregoing method embodiments.

A message conference service allows a user to send contents to other users in real time to convene an online conference. The message content in the message conference service may be a text, web page, picture, or any other files including songs and video clips. FIG. 3 shows a message conference service architecture based on an IP Multimedia Subsystem (IMS). The architecture includes: a UE, a Call Session Control Function (CSCF), an Application Server (AS) or a Multimedia Resource Function Controller (MRFC), a Multimedia Resource Function Processor (MRFP), and a billing domain.

The UE, the CSCF, and the AS/ MRFC communicate with each other through a Session Initiation Protocol (SIP); the UE communicates with the MRFP through a Message Session Relay Protocol (MSRP); the MRFP communicates with the AS/MRFC through an H.248 protocol; and the AS/MRFC communicates with the charging device in the billing domain through a Diameter protocol. The MRFC is equivalent to an MC; and the MRFP is equivalent to an MP.

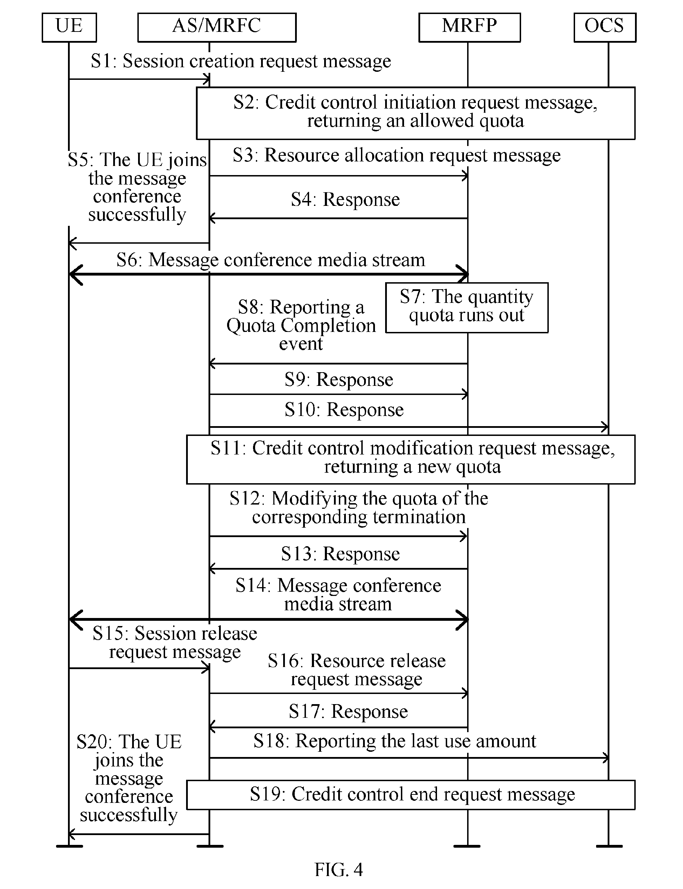

FIG. 4 is a signaling flowchart of an online charging process of a message conference service. The process includes the following steps:

Step 1: A UE sends a session creation request message to an AS/MRFC, requesting to create a session. Specifically, the UE may send an INVITE message in the SIP to create a session. The corresponding media plane is not audio or video, but messages.

Step 2: The AS/MRFC sends a credit control initiation request message to an OCS in the billing domain, requesting the corresponding quota. The OCS returns an allowed quota.

Step 3: The MRFC sends a resource allocation request message (ADD) to an MRFP, instructing the MRFP to allocate the resources such as termination and indicating the quota allowed for the termination.

It is assumed that the charging policy is traffic-based charging in the receiving direction and quantity-based charging in the sending direction. In this step, it is assumed that the quota for the sending direction is 10 messages, the quota for the receiving direction is 2048 bytes, and the validity period is 5 minutes. The signaling may be

$$\text{"addReq}\{\$,\text{Events}=\{\text{qsr/sq(qu=number,qq=10),qsr/rq(qu=volume,qc=all,qq=2048),qsr/vt(tl=300)}\}\}$$
".

Step 4: The MRFP returns a response to the MRFC to confirm receiving of the resource allocation request message. The signaling of the response may be "addReply{T1}".

Step 5: The AS/MRFC indicates that the UE joins the message conference successfully. The signaling may be "OK".

Step 6: The message conference media streams are transmitted through the bearer network.

Step 7: The quota of 10 messages is finished.

Step 8: The MRFP reports a Quota Completion event that carries parameters such as the consumed part of the quota, for example, 10 messages have been sent, and 512 bytes have been received. The signaling may be "notifyReq {T1,ObservedEven ts={qsr/ sq(sqq=10,rqq=512)}}".

Step 9: The MRFC returns a response to the MRFP to confirm receiving of the Quota Completion event. The signaling may be "notifyReply{T1}".

Step 10: The MRFC reports the Quota Completion event to the OCS, and the OCS performs charging for the termination of the corresponding user in the MRFP according to the quota value carried in the Quota Completion event.

Step 11: The AS/MRFC sends a credit control modification request message to the OCS, requesting to modify the quota. The OCS returns a new allowed quota.

Step 12: The MRFC instructs the MRFP to modify the quota of the corresponding termination. It is assumed that the modified quota is: The quota for the sending direction is 20 messages, and the quota for the receiving direction is 2048 bytes, and the validity period is 5 minutes. The signaling may be "modReq{T1,Events={qsr/sq(qu=number, qq=20), qsr/rq(qu=volume,qc=all,qq=20 48),qsr/vt(tl=300)}}".

Step 13: The MRFP returns a response to the MRFC to confirm receiving of the modified quota. The signaling may be "modReply{T1}".

Step 14: The message conference media streams are transmitted through the bearer network.

Step 15: The UE sends a session release request message to the AS/MRFC, requesting to release the session. The signaling may be "BYE".

Step 16: The MRFC sends a resource release (SUBTRACT) request message to the MRFP, instructing the MRFP to release the resources such as termination and audit the statistic value. The signaling may be "subReq {T1,audit {Statistics}}"

Step 17: The MRFP returns a response to the AS/MRFC. The response indicates that the accumulated number of sent messages is 15 and the accumulated received traffic is 1024 bytes. According to the two values, the AS/MRFC calculates out the last use amount. That is, 5 messages are sent and 512 bytes are received from the last reporting (Notify) till now because the previously reported number of sent messages is 10 and the previously received traffic is 512 bytes. The signaling may be "subReply{T1,Statistics{qs r/sqaq=15,qsr/rqaq=1024}}".

Step 18: The AS/MRFC reports the last use amount to the OCS, and the OCS performs charging according to the last use amount.

Step 19: The AS/MRFC sends a credit control end request message to the OCS, requesting to end the credit. The OCS returns a response.

Step 20: The AS/MRFC indicates that the UE leaves the message conference successfully.

Note that one termination may have multiple media streams such as audio streams, video streams and message streams at the same time in a multimedia conference service. If the use amount of a single type of media streams needs to be collected, the MC may set a stream identifier of each stream of the termination for the quota to be delivered, and the quota is specific to the media stream corresponding to the stream identifier. When the MP sets the quota, the MP may set a corresponding quota for the termination according to the stream identifier corresponding to a specific type of media stream of the termination.

First System Embodiment

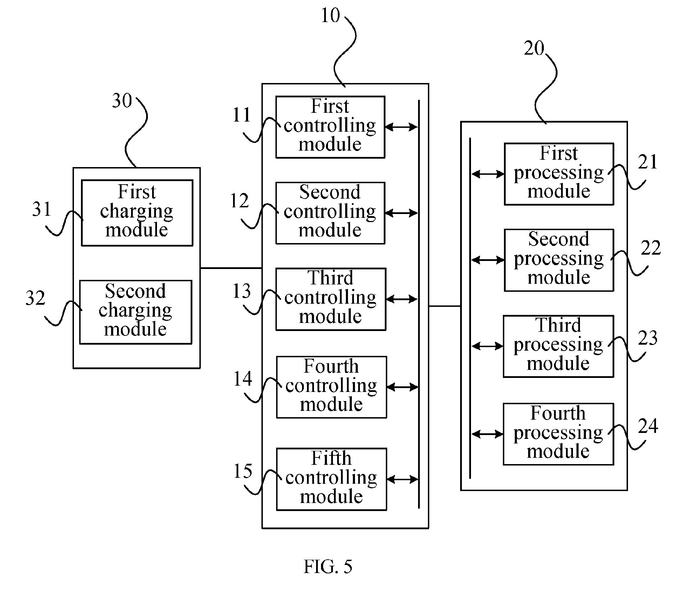

This embodiment provides a system for reporting the use amount of a data service proactively in real time in a split architecture. As shown in FIG. 5, the system includes an MC 10 and an MP 20 which are telecom-connected. If the system needs to be capable of charging, the system further includes an OCS 30, which is telecom-connected with the MC 10. The working principles of the system are as follows:

The first charging module 31 in the OCS 30 delivers a quota indication to the MC 10.

The quota indication includes the specified quota. Note that although the quota indication is delivered by the OCS 30 in this embodiment, the quota indication may be delivered to the MC 10 in other modes. Afterward, receiving the quota delivered by the OCS 30, the first controlling module of the MC 10 instructs the MP 20 to set a quota for the termination.

After the first processing module 21 of the MP 20 receives the quota from the MC 10, the second processing module 22 sets a quota for the termination, and collects the use amount of the data service of the termination; and the third processing module 23 reports a Quota Completion event to the MC 10 when the use amount of the data service consumed by the termination reaches the quota. The Quota Completion event carries a quota value. In this way, the MP 20 reports the quota proactively.

In order to be capable of charging, the MC 10 may include a third controlling module 13. When the second controlling module 12 receives the Quota Completion event reported by the MP 20, the third controlling module 13 reports the Quota Completion event received by the second controlling module 12 to the OCS 30. The second charging module 32 in the OCS 30 performs charging for the termination according to the quota value carried in the Quota Completion event.

When the UE sends a session release request to the MC 10 to request release of the current session, the MC 10 may use the fourth controlling module 14 to instruct the MP 20 to release the termination corresponding to the session and report the last use amount of the data service consumed by the termination before release of the session. The fourth processing module 24 of the MP 20 releases the termination corresponding to the session, and the fifth processing module 25 reports the last use amount of the termination to the MC 10 after the termination is released. The fifth controlling module 15 of the MC 10 reports the last use amount to the OCS 30, and the second charging module 32 in the OCS 30 performs charging for the termination according to the last use amount.

Through the system in the embodiment described above, the MC 10 interacts with the MP 20 in real time, and the MP can monitor the use amount of the data service consumed by the user in real time, and report the statistic information when conditions are fulfilled. In this way, online charging can be performed for the data service.

Second System Embodiment

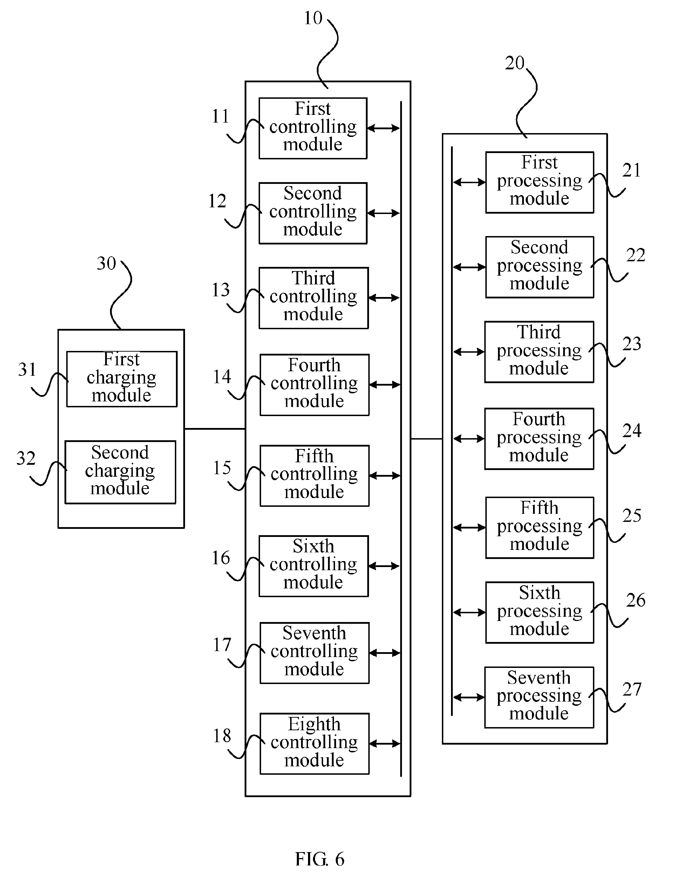

On the basis of the first system embodiment, this embodiment provides another OCS for data services. As shown in FIG. 6, the MC 10 further includes: a sixth controlling module 16, a seventh controlling module 17, and an eighth controlling module 18; and the MP 20 further includes: a sixth processing module 16, and a seventh processing module 17. The working principles of the system are as follows:

After the first controlling module 11 of the MC 10 delivers a quota to the MP 20, the sixth controlling module 16 instructs the MP 20 to set a validity period for the termination. The sixth processing module 26 of the MP 20 sets a validity period for the termination. More specifically, a timer is started according to the validity period before the second processing module 22 makes statistics for the use amount of the data service of the termination, and the seventh processing module 27 reports a Validity Period Expiry event to the MC 10 when the quota does not run out but the validity period expires. After the seventh controlling module 17 of the MC 10 receives the Validity Period Expiry event, the eighth controlling module 18 reports the Validity Period Expiry event to the OCS 30. The second charging module 32 of the OCS 30 performs charging for the termination according to the use amount of the data service consumed in the validity period, where the use amount is carried in the Validity Period Expiry event.

Through the system in the embodiment described above, the MC 10 obtains the use amount of the data service consumed by the UE periodically, it is avoided that the statistic information fails to be reported in the case that the use amount of the data service does not reach the preset quota due to equipment faults, and the online charging process is improved.

Persons of ordinary skill in the art should understand that all or a part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be a magnetic disk, Compact Disk (CD), Read-Only Memory (ROM), or Random Access Memory (RAM).

Finally, it should be noted that the above embodiments are merely provided for describing the technical solutions of the present invention, but not intended to limit the present invention. It is apparent that persons skilled in the art can make various modifications and variations to the invention without departing from the spirit and scope of the invention. The present invention is intended to cover the modifications and variations provided that they fall in the scope of protection defined by the following claims or their equivalents.

## Claims

1. A method for reporting use amount of a data service proactively in real time in a split architecture, comprising:

    by a Media Processor (MP), receiving a quota delivered by a Media Controller (MC); and
    setting the quota for a termination on the MP, and collecting the use amount of the data service of the termination; and reporting a Quota Completion event to the MC when the use amount of the data service consumed by the termination reaches the quota.

2. The method for reporting use amount of a data service proactively in real time in a split architecture according to claim 1, further comprising:

    by the MP, receiving a validity period delivered by the MC; and
    setting the validity period for the termination, and reporting a Validity Period Expiry event when the quota does not run out but the validity period expires, where the Validity Period Expiry event carries the use amount of the data service consumed in the validity period.

3. The method for reporting use amount of a data service proactively in real time in a split architecture according to claim 1, wherein: after the Quota Completion event is reported to the MP, the method further comprises:

    by the MP, receiving a new quota indicated by the MC; and
    setting a quota for the termination according to the new quota, and statisticizing the use amount of the data service of the termination.

4. The method for reporting use amount of a data service proactively in real time in a split architecture according to claim 2, wherein: after the Quota Completion event is reported to the MP, or after the MP reports the Validity Period Expiry event, the method further comprises:

    by the MP, releasing the termination corresponding to a session and reporting a last use amount of the data service of the termination after the MC receives a request for releasing the session from User Equipment (UE), wherein the last use amount has not been reported yet before release of the session.

5. The method for reporting use amount of a data service proactively in real time in a split architecture according to claim 4, wherein the reporting of the last use amount comprises:

    calculating an accumulated value of the use amount of the data service consumed by the termination, reporting the accumulated value to the MC so that the MC can obtain the last use amount according to the accumulated value minus all use amounts reported previously.

6. The method for reporting use amount of a data service proactively in real time in a split architecture according to claim 1, wherein the MP set the quota for the termination in the following way:

setting a corresponding quota for the termination according to a stream identifier corresponding to a specific type of media stream of the termination.

7. The method for reporting use amount of a data service proactively in real time in a split architecture according to claim 1, wherein: after the Quota Completion event is reported, the method further comprises:

by the MC, reporting the Quota Completion event to an Online Charging System (OCS); by the OCS, performing charging for the termination according to a quota value carried in the Quota Completion event.

8. The method for reporting use amount of a data service proactively in real time in a split architecture according to any of claims 1-7, wherein the use amount of the data service comprises:

traffic or quantity of the data service consumed in a sending direction or receiving direction.

9. The method for reporting use amount of a data service proactively in real time in a split architecture according to claim 8, wherein:

the traffic is overall traffic or payload traffic.

10. The method for reporting use amount of a data service proactively in real time in a split architecture according to claim 9, wherein:

the MC is a Multimedia Resource Function Controller (MRFC) and the MP is a Multimedia Resource Function Processor (MRFP).

11. A Media Controller (MC), comprising:

a first controlling module, adapted to send a quota specified in a quota indication to a Media Processor (MP) after receiving a quota indication, and instruct the MP to set the quota for a termination; and
a second controlling module, adapted to receive a Quota Completion event which is reported by the MP when use amount of the data service consumed by the termination reaches the quota.

12. The MC of claim 11, further comprising:

a sixth controlling module, adapted to instruct the MP to set a validity period for the termination if the validity period of the quota is received at the same time of receiving the quota indication; and
a seventh controlling module, adapted to receive a Validity Period Expiry event reported by the MP when the quota does not run out but the validity period expires.

13. The MC of claim 11, further comprising:

a third controlling module, adapted to report the Quota Completion event received by the second controlling module to an Online Charging System (OCS), whereupon the OCS performs charging for the termination according to a quota value carried in the Quota Completion event.

14. The MC of claim 13, further comprising:

a fourth controlling module, adapted to instruct the MP to release the termination corresponding to a session and report a last use amount of the data service of the termination before release of the session when receiving a request for releasing the session from User Equipment (UE); and
a fifth controlling module, adapted to report the last use amount to the OCS, whereupon the OCS performs charging for the termination according to the last use amount.

**15.** The MC of claim 14, further comprising:

an eighth controlling module, adapted to report a Validity Period Expiry event to the OCS, whereupon the OCS performs charging for the termination according to the use amount of the data service consumed in a validity period, wherein the use amount is carried in the Validity Period Expiry event.

**16.** A Media Processor (MP), comprising:

a first processing module, adapted to receive a quota delivered by a Media Controller (MC), or receive the quota and a validity period;
a second processing module, adapted to set the quota for a termination, and statisticize use amount of a data service of the termination; and
a third processing module, adapted to report a Quota Completion event to the MC when the use amount of the data service consumed by the termination reaches the quota.

**17.** The MP of claim 16, further comprising:

a sixth processing module, adapted to set the validity period for the termination; and
a seventh processing module, adapted to report a Validity Period Expiry event when the quota does not run out but the validity period expires.

**18.** The MP of claim 17, further comprising:

a fourth processing module, adapted to release the termination corresponding to a session when the MC receives a request for releasing the session from User Equipment (UE); and
a fifth processing module, adapted to report a last use amount of the data service of the termination before release of the session after the fourth processing module releases the termination.

**19.** A system for reporting use amount of a data service proactively in real time in a split architecture, comprising a Media Controller (MC) and a Media Processor (MP) which are telecom-connected, wherein:

the MC is adapted to deliver a quota specified in a quota indication to the MP after receiving the quota indication; and
the MP is adapted to set the quota for a termination, and statisticize the use amount of the data service of the termination; and report a Quota Completion event to the MC when the use amount of the data service consumed by the termination reaches the quota.

**20.** The system for reporting use amount of a data service proactively in real time in a split architecture according to claim 19, wherein:

the MP is further adapted to set a validity period for the termination, and report a Validity Period Expiry event when the quota does not run out but the validity period expires, wherein the Validity Period Expiry event carries the use amount of the data service consumed in the validity period.

**21.** The system for reporting use amount of a data service proactively in real time in a split architecture according to claim 20, wherein: the system further comprises an Online Charging System (OCS) which is telecom-connected with the MC, and the OCS comprises:

a first charging module, adapted to deliver the quota to the MC; and
a second charging module, adapted to perform charging for the termination in the MP according to a quota value carried in the Quota Completion event reported by the MC, or according to the use amount of the data service consumed in the validity period, wherein the use amount is carried in the Validity Period Expiry event reported by the MC, or according to a last use amount reported by the MC.

```
┌─────────────────────┐
│  The OCS delivers a │ ⌇ 101
│        quota        │
└─────────────────────┘
           │
           ▼
┌─────────────────────┐
│   Set a quota for the│ ⌇ 102
│      termination     │
└─────────────────────┘
           │
           ▼
┌─────────────────────┐
│    Report a Quota    │
│ Completion event when│ ⌇ 103
│  the quota runs out  │
└─────────────────────┘
           │
           ▼
┌─────────────────────┐
│   Send a new quota   │ ⌇ 104
└─────────────────────┘
           │
           ▼
┌─────────────────────┐
│ Release the termination│
│ and report the last use│ ⌇ 105
│        amount         │
└─────────────────────┘
```

FIG. 1

The OCS delivers a quota — 201

Set a quota and a validity period of the quota for the termination — 202

203 — Statisticize the use amount

The quota runs out

The quota does not run out but the validity period expires

210 — Report a Quota Completion event

Report a Validity Period Expiry event — 220

Send a new quota — 230

FIG. 2

CSCF —— SIP —— AS/ MRFC —— Diameter —— Billing domain

SIP

H248

UE —— MSRP —— MRFP

FIG. 3

| UE | AS/MRFC | MRFP | OCS |
|---|---|---|---|

S1: Session creation request message

S2: Credit control initiation request message, returning an allowed quota

S5: The UE joins the message conference successfully

S3: Resource allocation request message

S4: Response

S6: Message conference media stream

S7: The quantity quota runs out

S8: Reporting a Quota Completion event

S9: Response

S10: Response

S11: Credit control modification request message, returning a new quota

S12: Modifying the quota of the corresponding termination

S13: Response

S14: Message conference media stream

S15: Session release request message

S16: Resource release request message

S17: Response

S18: Reporting the last use amount

S20: The UE joins the message conference successfully

S19: Credit control end request message

FIG. 4

FIG. 5

FIG. 6

# INTERNATIONAL SEARCH REPORT

| | International application No. |
|---|---|
| | PCT/CN2009/071056 |

**A. CLASSIFICATION OF SUBJECT MATTER**

H04L 12/14(2006.01)i

According to International Patent Classification (IPC) or to both national classification and IPC

**B. FIELDS SEARCHED**

Minimum documentation searched (classification system followed by classification symbols)

IPC:H04L 12/-

Documentation searched other than minimum documentation to the extent that such documents are included in the fields searched

Electronic data base consulted during the international search (name of data base and, where practicable, search terms used)

WPI;EPODOC;PAJ;CPRS;CNKI: quota, quantum, ration, norm, allotment, charge, pay, prepay, credit, authorization, report, forward, tell, traffic, flow, rate, discharge, time, duration, interval, release, network

**C. DOCUMENTS CONSIDERED TO BE RELEVANT**

| Category* | Citation of document, with indication, where appropriate, of the relevant passages | Relevant to claim No. |
|---|---|---|
| | CN101001161A (ZHONGXING COMMUNICATION CO LTD SHENZHEN) 18 Jul. 2007(18.07.2007) | |
| X | Claims 1-6, page 5 line 22-page 10 line 5 of description, figs. 2-3 | 1-5,7-21 |
| Y | The same as above | 6 |
| Y | CN101090326A(ZHONGXING COMMUNICATION CO LTD) 19 Dec. 2007(19.12.2007) Claims 4-8 | 6 |
| A | US2007005764A1 (TELEFONAKTIEBOLAGET ERICSSON L M) 04 Jan. 2007(04.01.2007) The whole document | 1-21 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 May 2009(18.05.2009) | **04 Jun. 2009 (04.06.2009)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **LV, He** Telephone No. (86-10)010-62411400 |
|---|---|

Form PCT/ISA/210 (second sheet) (April 2007)

**INTERNATIONAL SEARCH REPORT**
Information on patent family members

International application No.

PCT/CN2009/071056

| Patent Documents referred in the Report | Publication Date | Patent Family | Publication Date |
|---|---|---|---|
| CN101001161A | 18.07.2007 | NONE | |
| CN101090326A | 19.12.2007 | NONE | |
| US2007005764A1 | 04.01.2007 | WO2007001231A2 | 04.01.2007 |
| | | EP1900142A2 | 19.03.2008 |

Form PCT/ISA/210 (patent family annex) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   CN 200810090359